# EUROPÄISCHE PATENTSCHRIFT

(11) **EP 1 338 449 B1**
(45) Veröffentlichungstag und Bekanntmachung des Hinweises auf die Patenterteilung: **22.06.2005**
(21) Anmeldenummer: 03003752.7
(22) Anmeldetag: 19.02.2003
(51) Int. Cl.: B60H 1/03, B60H 1/08, B60H 1/32

(54) **Fahrzeugklimaanlage, insbesonderee CO2-Klimaanlage**
Vehicle air conditioning system, especially CO2-air conditioning system
Système de climatisation de véhicule, en particulier système de climatisation à CO2

(30) Priorität: 20.02.2002 DE 10207128
(43) Veröffentlichungstag der Anmeldung: 27.08.2003
(73) Patentinhaber: Zexel Valeo Compressor Europe GmbH, 68766 Hockenheim (DE)
(72) Erfinder: Hesse, Ullrich, Dr., 71563 Affalterbach (DE)
(74) Vertreter: Popp, Eugen, Dr.

(56) Entgegenhaltungen:
- DE-A- 10 006 513
- DE-A- 10 123 830
- DE-A- 19 818 649
- DE-C- 19 850 829
- PATENT ABSTRACTS OF JAPAN vol. 2000, no. 11, 3. Januar 2001 (2001-01-03) & JP 2000 211350 A (JAPAN CLIMATE SYSTEMS CORP), 2. August 2000 (2000-08-02)

## Beschreibung

Die Erfindung betrifft eine Fahrzeugklimaanlage gemäß dem Oberbegriff des Patentanspruchs 1.

Fahrzeugklimaanlagen dienen primär zur Kühlung des Fahrgastraumes im Sommer. Für den Winterbetrieb sind Klimaanlagen meist nicht geeignet. Dabei zeigt sich, daß moderne Fahrzeuge mit verbrauchsarmen Motoren im Winter eine unbefriedigende Heizleistung aufweisen. Zur Abhilfe werden insbesondere bei diesen Fahrzeugen Zusatzheizungen serienmäßig eingebaut. Grundsätzlich lassen sich auch Klimaanlagen als Zusatzheizung einsetzen, d.h. in sog. Wärmepumpenschaltung betreiben. Dies bedeutet natürlich eine Funktionsumkehr herkömmlicher Klimaanlagen, bei denen als Kältemittel R 134a verwendet wird. Der Betrieb herkömmlicher Klimaanlagen in Wärmepumpenschaltung hat einen relativ hohen Schaltungs- und Steuerungsaufwand zur Folge. Des weiteren ist die Heizleistung, insbesondere bei sehr niedrigen Außentemperaturen, unbefriedigend, da der Verdampfungsdruck temperaturbedingt bis in den Unterdruckbereich absinkt. Damit werden die Saugdichte und umgesetzte Leistung entsprechend gering.

Bei Einsatz von CO₂ als Kältemittel lassen sich günstigere Voraussetzungen schaffen. Untersuchungen haben gezeigt, daß im Wärmepumpenbetrieb mit CO₂ sich hohe Heizleistungen erzielen lassen. Des weiteren ist der Schaltungsaufwand erheblich einfacher als bei R 134a-Klimaanlagen.

Der Ausgangspunkt einer entsprechenden Klimaanlage ist der herkömmliche Heizkreislauf eines Fahrzeugs einerseits und Kältemittelkreislauf einer CO₂-Klimaanlage andererseits entsprechend Figur 7. Figur 7 zeigt eine mögliche Anordnung für den Heizkreislauf eines Kraftfahrzeuges und das Anlagen-Schema bzw. den Kältemittelkreislauf einer CO₂-Klimaanlage, die allein für einen Kühlbetrieb ausgelegt ist. Der Heizkreislauf umfasst einen Motor 1, einen Heizwärmetauscher 2, eine Umwälzpumpe 3, bei der es sich üblicherweise um die Hauptwasserpumpe des Motors 1 handelt, und ein Zwei-Wege-Ventil 4. Für den Kühlkreislauf sind wesentlichen Komponenten mit einem Verdampfer 5, einem Verdichter 6, einem Kältemittelkühler 7, einem inneren Wärmetauscher 8 und einem Expansionsventil 9 dargestellt. Der Heizwärmetauscher 2 ist durch eine By-pass-Leitung überbrückbar, wobei zwischen dieser By-pass-Leitung und dem Heizwärmetauscher 2, insbesondere Heizwärmetauscherauslaß das Zwei-Wege-Ventil 4 angeordnet ist. Durch entsprechende Umschaltung dieses Ventils lässt sich das Kühlwasser entweder durch den Heizwärmetauscher 2 oder an diesem vorbei leiten.

Ein Heizbetrieb ist mit der vorstehend beschriebenen Klimaanlage gemäß Figur 7 nicht möglich.

Eine Klimaanlage, die außer zur Kühlung des Fahrgastraumes im Sommer auch als Heizung Verwendung finden kann, ist aus der DE 100 06 513 A1, welche die Grundlage für den Oberbegriff des Patentanspruchs 1 bildet, bekannt. Die Klimaanlage gemäß der DE 100 06 513 A1 umfaßt im wesentlichen einen Verdichter, einen Kältemittelkühler, einen inneren Wärmetauscher zwischen Kühlmittelkühler- und Verdampferseite, ein Expansionsventil und einen Verdampfer, wobei zur Umschaltung der Klimaanlage vom Kühlbetrieb in den Heizbetrieb ein mit einem motorseitigen Kühlkreislauf korrespondierender zusätzlicher Wärmetauscher integriert ist. Ferner ist dem zusätzlichen Wärmetauscher ein Expansionsventil nachgeordnet, mittels dem bei Heizbetrieb das Kältemittel auf einen niedrigeren Druck drosselbar ist.

Ferner ist aus der DE 198 18 649 A1 eine der vorstehend näher beschriebenen Klimaanlage ähnliche Klimaanlage bekannt. Auch die Klimaanlage gemäß DE 198 18 649 A1 kann sowohl zum Kühlen als auch zum Heizen verwendet werden, wobei die Betonung bei der Klimaanlage gemäß der DE 198 18 649 A1 darauf liegt, die Kaltstarteigenschaften eines Fahrzeugs zu verbessern, d.h. beim Kaltstart eines Fahrzeugs sowohl den Motor als auch den Fahrzeuginnenraum schneller aufzuheizen.

Den beiden vorstehend näher beschriebenen Klimaanlagen gemäß DE 100 06 513 A1 und DE 198 18 649 A1 ist jedoch gemeinsam, daß eine Überbrückung des Expansionsventils, die notwendig ist, um einen herkömmlichen Kühlbetrieb der Klimaanlage gewährleisten zu können, relativ kompliziert gelöst ist.

Ausgehend von diesem Stand der Technik liegt der vorliegenden Erfindung die Aufgabe zugrunde, eine konstruktiv möglichst einfache Lösung zur Überbrückung des Expansionsventils anzugeben, wobei die Klimaanlage ohne großen Aufwand von einem Kühlbetrieb in einen Heizbetrieb und umgekehrt schaltbar ist.

Diese Aufgabe wird erfindungsgemäß durch eine Klimaanlage mit den Merkmalen des Anspruches 1 gelöst, wobei bevorzugte konstruktive Details in den Unteransprüchen beschrieben sind.

Ein wesentlicher Punkt der Erfindung ist es demnach, daß eine By-pass-Leitung vor einem in der der Kältemittel-Leitung angeordneten Absperrventil abzweigt und mit der Eingangsseite des Verdichters unmittelbar, d.h. unter Überbrückung des übrigen Kältemittelkreislaufs fluidverbunden ist. Damit ist eine konstruktiv einfache Lösung der der Aufgabe zugrunde liegenden Erfindung gewährleistet.

Weitere vorteilhafte Ausführungsformen ergeben sich aus den abhängigen Ansprüchen.

Nachstehend werden zwei bevorzugte Ausführungsformen der erfindungsgemäßen Klimaanlage anhand der beigefügten Zeichnung näher beschrieben. Es zeigen:
- Figur 1: eine erste Ausführungsform (Schaltschema) einer erfindungsgemäßen Fahrzeugklimaanlage;
- Figur 2: eine zweite Ausführungsform (Schaltschema) einer erfindungsgemäßen Fahrzeugklimaanlage; und
- Figuren 3 bis 6: weitere Abwandlungen (Schaltschemen) einer erfindungsgemäßen Fahrzeugklimaanlage.

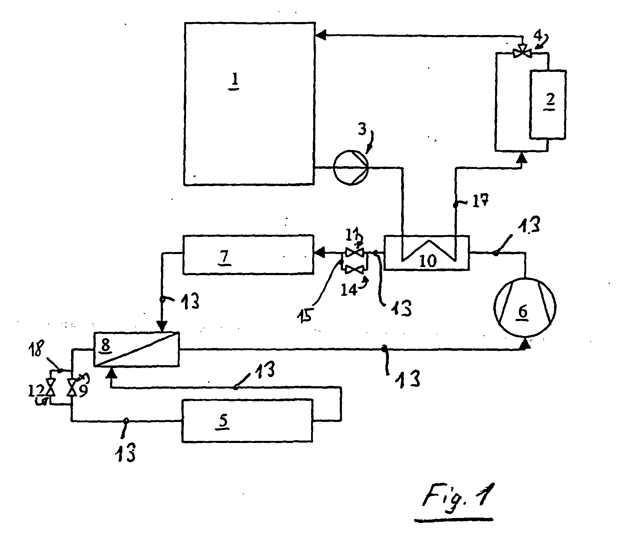

Die Klimaanlage gemäß Figur 1 ist gegenüber dem Stand der Technik nach Figur 3 dahingehend modifiziert, daß ein Heizbetrieb mit der dann als Wärmepumpe arbeitenden Klimaanlage möglich ist. Zu diesem Zweck ist ein zusätzlicher Wärmetauscher 10 vorgesehen, der zum Enthitzen des gasförmigen Kältemittels und zum Übertragen der Wärme an einen Kühlwasserkreislauf eingebunden ist. Der Kühlwasserkreislauf ist mit der Bezugsziffer 17 gekennzeichnet. Im zusätzlichen Wärmetauscher 10 erfolgt also ein Wärmeaustausch zwischen dem Kältemittelkreislauf einerseits und motorseitigem Kühlwasserkreislauf andererseits. Das auf hohe Temperatur erhitzte Kältemittel, nämlich CO₂, stammt von dem Wärmetauscher 10 vorgeschalteten Verdichter 6. Dem zusätzlichen Wärmetauscher 10 ist ein Expansionsventil 14 nachgeordnet, mittels dem bei Heizbetrieb das Kältemittel auf einen niedrigeren Druck drosselbar ist. Konkret befindet sich das Expansionsventil 14 in einer By-pass-Leitung, die von der Kältemittel-Leitung 13 zwischen zusätzlichem Wärmetauscher 10 und Kältemittelkühler 7 abzweigt. Diese By-pass-Leitung ist mit der Bezugsziffer 15 gekennzeichnet. Sie ist parallel zur erwähnten Kühlmittel-Leitung unter Überbrückung eines in dieser angeordneten Absperrventils 11 geschaltet. Das Absperrventil 11 dient zur Absperrung des freien Kältemittel-Durchgangs zwischen dem zusätzlichen Wärmetauscher 10 und Kältemittelkühler 7. In der Sperrstellung des Ventils 11 ist das Expansionsventil 14 wirksam, durch das der Druck des Kältemittels soweit abgedrosselt wird, daß der im Klimafall als Kältemittelkühler dienende Wärmetauscher 7 im Wärmepumpenbetrieb als Verdampfer Umgebungswärme aufnimmt.

Darüber hinaus sei erwähnt, daß im Kältemittelkreislauf zwischen dem inneren Wärmetauscher 8 und dem diesem nachgeordneten Verdampfer 5 ein weiteres Expansionsventil 9 angeordnet ist, das bei Bedarf, nämlich Heizbetrieb durch eine By-pass-Leitung 18 mit Absperrventil 12 überbrückbar ist. Im Heizbetrieb wird das üblicherweise wirksame Expansionsventil 9 durch die By-pass-Leitung 18 mit geöffnetem Absperrventil 12 überbrückt.

Die Betriebsweise im Heizbetrieb ist wie folgt:
Der Verdichter 6 verdichtet das Kältemittel, nämlich CO₂, auf einen hohen Enddruck von etwa 80-120 Bar. Die Verdichtungsendtemperaturen werden absichtlich hoch gehalten, so daß in dem zusätzlichen Wärmetauscher 10 ausreichend Wärme an den motorseitigen Heizwasserkreislauf 17 übertragen werden kann, die dann über den Heizwärmetauscher 2 der Fahrgastzelle zugeführt wird. Das Kältemittel, d.h. CO₂, wird durch das dem zusätzlichen Wärmetauscher 10 nachgeordnete Expansionsventil 14 auf eine niedrigeren Druck von z.B. etwa 20 Bar in das Nassdampfgebiet gedrosselt und verdampft im Kältemittelkühler 7 bei niedrigeren Temperaturen. Dabei nimmt das Kältemittel Umweltwärme auf. Der innere Wärmetauscher 8 und der Verdampfer 5 werden ohne nennenswerten Wärmeaustausch durchströmt. Das Ventil 12 wird praktisch ohne Druckverlust und damit ohne Druckänderung durchströmt.

Betriebsweise im Kühlbetrieb:
Im Verdampfer 5 verdampft das Kältemittel und nimmt so Wärme aus der Umgebungsluft auf, die der Fahrgastzelle zugeführt wird. Im inneren Wärmetauscher 8 wird das Sauggas überhitzt und dem Verdichter 6 zugeführt. Das Kältemittel wird auf einen Druck von z.B. 70-120 Bar verdichtet und erreicht eine Verdichtungsendtemperatur von bis zu und über 150 °C. Das Kältemittel wird anschließend im zusätzlichen Wärmetauscher 10 enthitzt und strömt durch das geöffnete Absperrventil 11 hindurch in den nachgeordneten Kältemittelkühler 7, und zwar energetisch bereits vorgekühlt, so daß im Kältemittelkühler 7 lediglich eine anteilige Kühlung des Kältemittels erfolgen muß. Das Kältemittel wird dann im inneren Wärmetauscher weiter unterkühlt und Expansionsventil 9 auf den Verdampfungsdruck gedrosselt. Beim Kühlbetrieb ist das Absperrventil 12 in der By-pass-Leitung 18 geschlossen. Energetisch vorteilhaft stehen für die Kühlung des Kältemittels bzw. CO₂-Gases sowohl der zusätzliche Wärmetauscher 10 als auch der Kältemittelkühler 7 zur Verfügung. Damit ist der Kühlbetrieb energetisch günstiger als bei einem reinen Kühlkreislauf nach Figur 3. Dieser Nebeneffekt kann dazu genutzt werden, einen kostengünstigeren Kältemittelkühler einzusetzen oder die energetische Effizienz der Gesamtanlage zu verbessern. Die Wärme, die vom zusätzlichen Wärmetauscher 10 an den Kühlwasserkreislauf 17 übertragen wird, lässt sich im By-pass um den Heizwärmetauscher 2 unmittelbar dem Motor 1 zuführen. Im Lehrlauf, bei niedrigen Lasten und im Warmlauf dient diese Wärme dazu, den Motor auf energetisch günstiger Betriebstemperatur zu halten und damit Kraftstoff einzusparen. Ist der Motor betriebswarm, wird die Wärme über den hier nicht näher dargestellten Motorkühler abgeführt.

Damit ist solch ein dem Verdichter nachgeschalteter, kühlwasserbeaufschlagter Wärmetauscher auch für eine CO₂-Klimaanlage ohne Heizfunktion vorteilhaft. Neben dem Wärmetauscher, der als Enthitzer eingesetzt wird, sind dann keine zusätzlichen Ventile erforderlich. Diese Version wird als erfindungsgemäße Variante betrachtet und beansprucht.

Wir der Motor an seinem thermischen Grenzbereich betrieben, was bei hohen Fahrgeschwindigkeiten unter hoher Last der Fall ist, so wird der Kältemittelkühler 7 luftseitig hinreichend gut durchströmt, so daß der Verdichtungsenddruck niedrig genug ist und die Verdichtungsendtemperatur ebenfalls niedrig ist. In diesem Fall wird vom zusätzlichen Wärmetauscher 10 an den dann ohnehin heißen Kühlwasserkreislauf keine Wärme mehr übertragen, da die Temperaturdifferenz gering oder sogar negativ ist. Der Motor wird dann thermisch nicht mehr zusätzlich belastet. Der Motorkühler braucht daher nicht größer dimensioniert werden.

Restwärme, die im Heizbetrieb nicht an die Fahrgastzelle übertragen wird, dient bei kaltem Motor dazu, diesen zusätzlich zu erwärmen und in einen energetisch günstigen Betriebspunkt zu bringen.

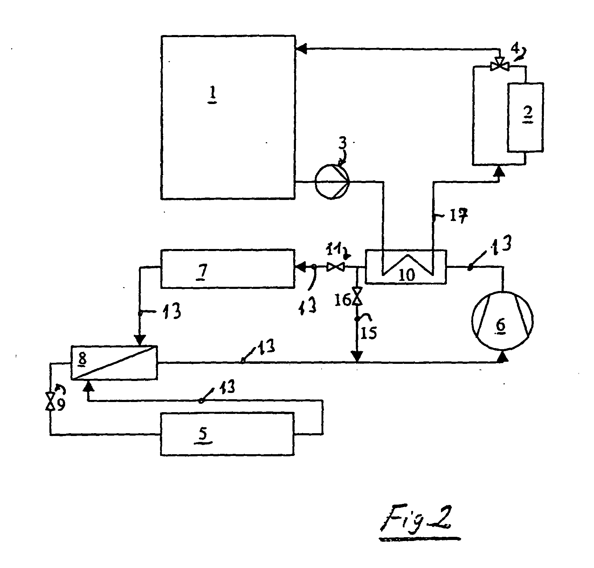

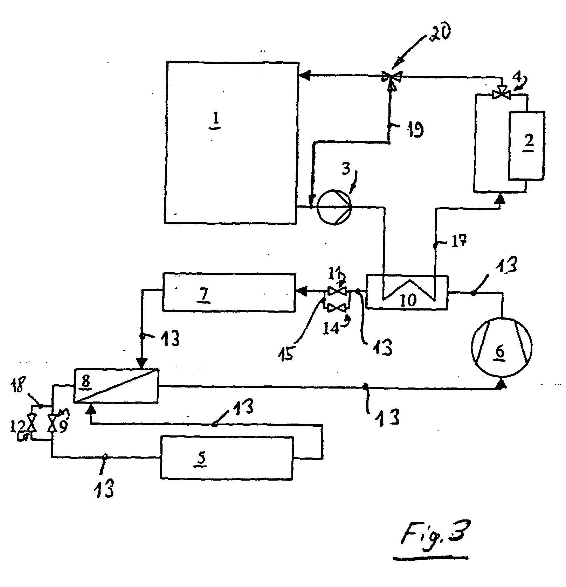

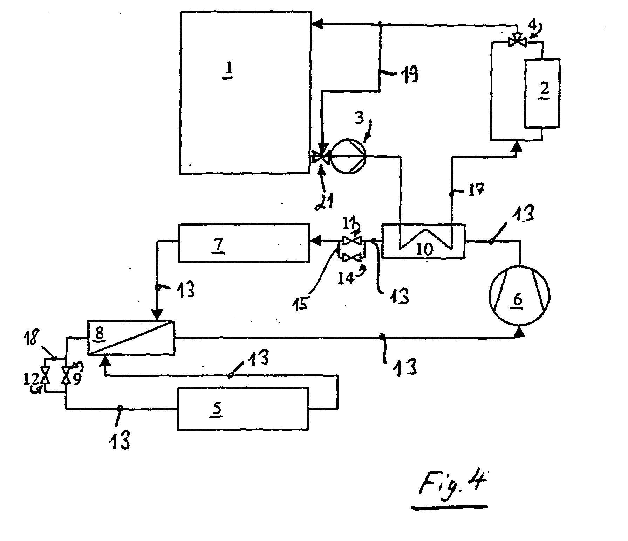

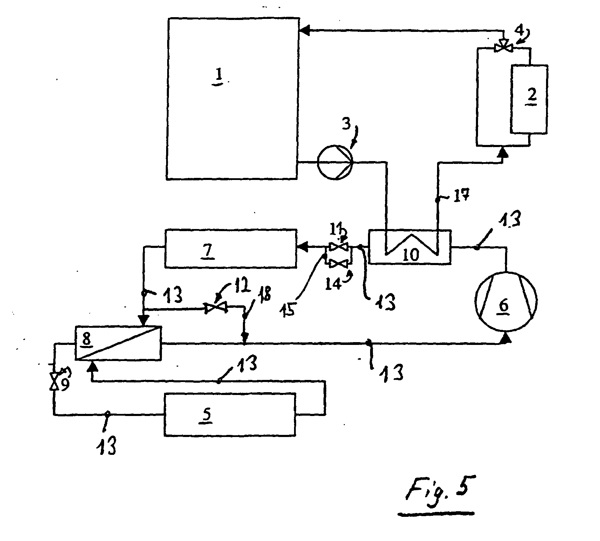

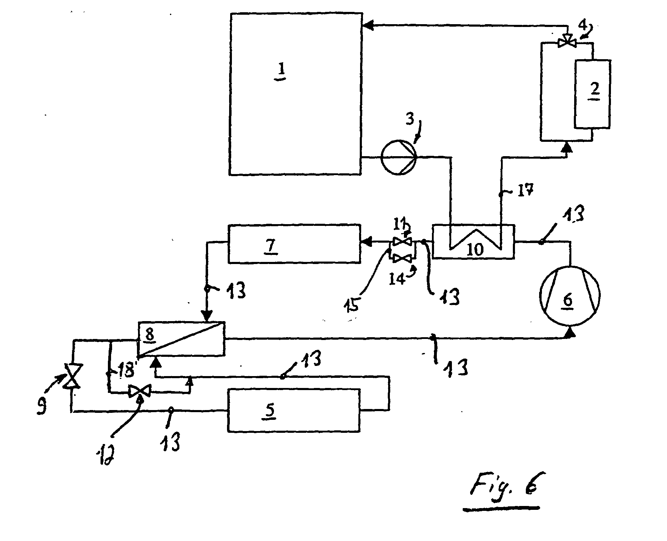

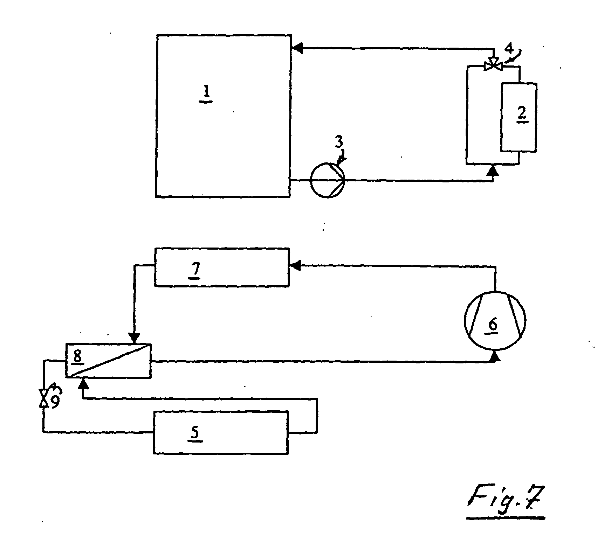

Die Variante gemäß Figur 2 zeichnet sich dadurch aus, daß von der Kältemittel-Leitung 13 zwischen zusätzlichem Wärmetauscher 10 und Kältemittelkühler 7 eine By-pass-Leitung 15 abzweigt, und zwar vor einem in der erwähnte Kältemittel-Leitung 13 angeordneten Absperrventil 11. Die By-pass-Leitung 15 ist mit der Eingangsseite des Verdichters 6 unmittelbar, d.h. unter Überbrückung des übrigen Kühlmittelkreislaufs fluidverbunden.

Bei dieser Ausführungsform ist es nicht erforderlich, das weitere Expansionsventil 9 zwischen innerem Wärmetauscher 8 und Verdampfer 5 zu überbrücken.

In der By-pass-Leitung 15 ist ein Expansionsventil 16 angeordnet. Die Ausführungsform nach Figur 2 zeichnet sich also durch einen Heißgas-By-pass-Kreislauf im Heizbetrieb aus bedingt durch die unmittelbare Verbindung zwischen dem Kältemittel-Ausgang des zusätzlichen Wärmetauschers 10 und dem Eingang des Verdichters 6. Die im zusätzlichen Wärmetauscher 10 abgegebene Leistung entspricht der vom Verdichter 6 aufgenommenen Leistung. Ein Wärmepumpenbetrieb durch Aufnahme zusätzlicher Umweltwärme liegt nicht vor. Das Expansionsventil 16 muß beim normalen Kühlbetrieb geschlossen sein. Es im übrigen denkbar, die By-pass-Leitung 15 bei der Ausführungsform nach Figur 2 als Kapillare auszuführen, die eine hinreichende Drosselwirkung besitzt. In diesem Fall würde es genügen, für das Ventil 16 ein einfaches Absperrventil zu verwenden. Wie bereits erwähnt, kann auf das Absperrventil 12 zur Umgehung des Expansionsventils 9 zwischen innerem Wärmetauscher 8 und Verdampfer 5 verzichtet werden. Vereisungsprobleme, die luftseitig am Kältemittelkühler 7 nicht völlig auszuschließen sind, können mit dieser Schaltung vorteilhaft gegenüber anderen Schaltungen vermieden werden. Weiterhin können Probleme durch Vereisungen und Restfeuchte am Verdampfer 5 vermieden werden.

Es sei an dieser Stelle noch erwähnt, daß Wärmepumpenschaltungen, die auf einer einfachen Kreislaufumkehr beruhen, häufig zu Problemen mit Restfeuchte auf der Verdampferoberfläche führen, die vom Klimabetrieb herrührt. Bei Umschaltung von Klima- bzw. Kühlbetrieb in den Heizbetrieb wird diese Feuchte dann von dem nun als Heizung verwendeten Verdampfer 5 der Klimaanlage freigesetzt und kann zu plötzlichem sicherheitsrelevantem Beschlag an den Scheiben des Kraftfahrzeuges führen. Man nennt dies auch "flash-fogging". Auch sind Geruchsbelästigungen denkbar.

Bei den hier beschriebenen Anlagen bzw. Schaltungen sind die vorgenannten Probleme ausgeschlossen, da der Verdampfer 5 stets kühl gehalten und die Wärme im wasserbeaufschlagten Heizwärmetauscher übertragen werden. Je nach Ausführung und Ansteuerung der Ventile lässt sich bei den beschriebenen Schaltungen auch ganz gezielt ein Entfeuchtungsbetrieb realisieren, bei dem im Verdampfer 5 entfeuchtet und Heizwärmetauscher 2 nachgeheizt wird.

Es sei ferner als weiterer Vorteil erwähnt, daß anders als bei bekannt gewordenen Wärmepumpen-Schaltungen mit dem Kältemittel CO₂, die das Kühlwasser des Motors als Wärmequelle verwenden, dem Kühlwasser keine Wärme entzogen wird. Damit heizt sich der Motor schnellstmöglich auf und auf die Zuheizung kann vorteilhaft frühzeitig verzichtet werden.

Als vorteilhaft zur schnelleren Aufheizung der Fahrgastkabine hat sich die zeitweilige Trennung vom Motor- und Heißwasserkreislauf z.B. nach Fig. 3 oder 4 erwiesen. Die Wärme wird von der Wärmepumpe bzw. der Heißgas-by-pass-Schaltung nur zur Aufheizung des kleinen Heizwasser-Kreislaufs verwendet. Ein schnelles Aufheizen ist die Folge. Ist die Kühlwassertemperatur hinreichend angestiegen, wird die Anlage wieder umgeschaltet und die Motorabwärme wird zum Heizen verwendet. Diese vorgenannte Umschaltung wird durch eine by-pass-Schaltung 19 im Heizwasser-Kreislauf zwischen Motor 1 und Pumpe 3 einerseits und der Rücklaufleitung zwischen Heizwärmetauscher 2 und Motor 1 andererseits erhalten, wobei entweder an letztgenannter Abzweigung ein Zwei-Wege-Ventil 20 (Fig. 3) oder an erstgenanntem Anschluß ein Zwei-Wege-Ventil 21 (Fig. 4) vorgesehen ist, mit dem die vorbeschriebene Umschaltung möglich ist.

Die erwähnten Absperrventile können natürlich auch in Zwischenstellungen gebracht werden abhängig vom gewünschten Betriebszustand.

Zur sicheren Vermeidung von Problemen bei der Durchströmung des Verdampfers 5 unter Heizbetrieb bei der Ausführungsform gemäß Fig. 1, ist in Fig. 5 und 6 eine Umgehung des Verdampfers 5 vorgesehen. Die by-pass-Leitung 18 mit by-pass-Ventil 12 überbrückt entweder den inneren Wärmetauscher 8 und Verdampfer 5 (Fig. 5) oder das Expansionsventil und Verdampfer 5 (Fig. 6), also in jedem Fall den Verdampfer 5.

Sämtliche in den Anmeldungsunterlagen offenbarten Merkmale werden als erfindungswesentlich beansprucht, soweit sie einzeln oder in Kombination gegenüber dem Stand der Technik neu sind.

### Bezugszeichen

- 1: Motor
- 2: Heizwärmetauscher
- 3: Pumpe
- 4: Zwei-Wege-Ventil
- 5: Verdampfer
- 6: Verdichter
- 7: Wärmetauscher bzw. Kältemittelkühler
- 8: innerer Wärmetauscher
- 9: Expansionsventil
- 10: zusätzlicher Wärmetauscher
- 11: Absperrventil
- 12: Absperrventil
- 13: Kältemittel-Leitung
- 14: Expansionsventil
- 15: By-pass-Leitung
- 16: Expansionsventil
- 17: Kühlwasserkreislauf
- 18: By-pass-Leitung
- 19: By-pass-Leitung
- 20: Zwei-Wege-Ventil
- 21: Zwei-Wege-Ventil

## Patentansprüche

1. Fahrzeugklimaanlage, insbesondere CO₂-Klimaanlage, deren Kältemittelkreislauf folgende Komponenten umfasst: Verdichter (6),
Kältemittelkühler (7),
innerer Wärmetauscher (8) zwischen Kühlmittelkühler- und Verdampferseite,
Expansionsventil (9), und
Verdampfer (5), wobei
zur Umschaltung der Klimaanlage vom Kühlbetrieb in Heizbetrieb ein mit einem motorseitigen Kühlkreislauf (17) korrespondierender zusätzlicher Wärmetauscher (10) integriert ist, wobei dem zusätzlichen Wärmetauscher (10) ein Expansionsventil (14, 16) nachgeordnet ist, mittels dem bei Heizbetrieb das Kältemittel auf einen niedrigeren Druck drosselbar ist, und wobei
das Expansionsventil (14; 16) Teil einer von der Kältemittel-Leitung (13) abzweigenden By-pass-Leitung (15) ist,
**dadurch gekennzeichnet, daß**
- der zusätzliche Wärmetauscher (10) zwischen Verdichter (6) und Kältemittelkühler (7) integriert ist,
- die By-pass-Leitung (15) zwischen zusätzlichem Wärmetauscher (10) und Kältemittelkühler (7) von der Kältemittelleitung abzweigt, und
- die By-pass-Leitung (15) vor einem in der Kältemittel-Leitung (13) angeordneten Absperrventil (11) abzweigt und mit der Eingangsseite des Verdichers (6) unmittelbar, d.h. unter Überbrückung des übrigen Kältemittelkreislaufs fluidverbunden ist.

2. Klimaanlage nach Anspruch 1,
**dadurch gekennzeichnet, daß**
im Kältemittelkreislauf zwischen innerem Wärmetauscher (8) und Verdampfer (5) ein weiteres Expansionsventil (9) angeordnet ist, das bei Bedarf, insbesondere Heizbetrieb durch eine By-pass-Leitung (18) mit Absperrventil (12) überbrückbar ist.

3. Klimaanlage nach einem der Ansprüche 1 oder 2,
**dadurch gekennzeichnet, daß**
ein motorseitiger Heizwärmetauscher (2) durch eine By-pass-Leitung überbrückbar ist, wobei die Umleitung des Kühlmediums, insbesondere Kühlwassers durch ein zwischen By-pass-Leitung und Heizwärmetauscher (2), insbesondere Heizwärmetauscher-Ein- oder -Auslaß angeordnetes Zwei-Wege-Ventil (4) erfolgt.

## Claims

1. Vehicle air-conditioning system, especially a CO₂ air-conditioning system, the coolant circuit of which comprises the following components:
compressor (6),
coolant cooler (7),
internal heat exchanger (8) between the coolant cooler side and evaporator side,
expansion valve (9) and
evaporator (5), wherein
there is integrated, for switching over the air-conditioning system from cooling operation to heating operation, an additional heat exchanger (10) associated with an engine-side cooling circuit (17), an expansion valve (14, 16) being arranged downstream of the additional heat exchanger (10), by means of which expansion valve the coolant can be throttled to a lower pressure during heating operation, and wherein
the expansion valve (14; 16) is part of a by-pass line (15) branching off from the coolant line (13),
**characterised in that**
- the additional heat exchanger (10) is integrated between the compressor (6) and the coolant cooler (7),
- the by-pass line (15) branches off, from the coolant line, between the additional heat exchanger (10) and the coolant cooler (7), and
- the by-pass line (15) branches off before a shut-off valve (11) arranged in the coolant line (13) and is in fluid communication with the inlet side of the compressor (6) directly, that is to say shunting the rest of the coolant circuit.

2. Air-conditioning system according to claim 1,
**characterised in that**
a further expansion valve (9) is arranged in the coolant circuit between the internal heat exchanger (8) and the evaporator (5), which further expansion valve is arranged to be shunted, when required, especially during heating operation, by a by-pass line (18) having a shut-off valve (12).

3. Air-conditioning system according to one of claims 1 or 2,
**characterised in that**
an engine-side heating heat exchanger (2) is arranged to be shunted by a by-pass line, the redirection of the cooling medium, especially cooling water, being effected by means of a two-way valve (4) arranged between the by-pass line and the heating heat exchanger (2), especially the heating heat exchanger inlet or outlet.

## Revendications

1. Système de climatisation de véhicule, tout particulièrement système de climatisation à CO2, dont le circuit de fluide frigorigène comprend les composants suivants :
un compresseur (6),
un dispositif de refroidissement du fluide frigorigène (7),
un échangeur de chaleur interne (8) entre le côté du dispositif de refroidissement du fluide frigorigène et celui de l'amortisseur,
une soupape de détente (9), et
un évaporateur (5),
dans lequel un échangeur de chaleur supplémentaire (10) correspondant avec un circuit de refroidissement du côté du moteur (17) est intégré pour faire basculer le système de climatisation depuis le fonctionnement à froid vers le fonctionnement à chaud, dans lequel une soupape de détente (14, 16) est agencée sur l'échangeur de chaleur supplémentaire (10), au moyen de laquelle le fluide frigorigène peut être réduit à une pression inférieure en cas de fonctionnement à chaud, et dans lequel la soupape de détente (14 ; 16) fait partie d'une conduite de dérivation (15) déviant de la conduite du fluide frigorigène (13), **caractérisé en ce que**
l'échangeur de chaleur supplémentaire (10) est intégré entre le compresseur (6) et le dispositif de refroidissement du fluide frigorigène (7),
la conduite de dérivation (15) dévie de la conduite du fluide frigorigène entre l'échangeur de chaleur supplémentaire (10) et le dispositif de refroidissement du fluide frigorigène (7), et
la conduite de dérivation (15) dévie d'une soupape d'arrêt (11) agencée dans la conduite du fluide frigorigène (13) et est directement reliée par le fluide avec le côté d'entrée du compresseur (6), c'est à dire en réalisant le pontage de l'autre circuit de fluide frigorigène.

2. Système de climatisation selon la revendication 1, **caractérisé en ce qu'**une autre soupape de détente (9) est agencée dans le circuit de fluide frigorigène entre l'échangeur de chaleur interne (8) et l'évaporateur (5), laquelle, en cas de besoin, tout particulièrement en cas de fonctionnement à chaud, peut être pontée par une conduite de dérivation (18) dotée d'une soupape d'arrêt (12).

3. Système de climatisation selon l'une des revendications 1 ou 2, **caractérisé en ce qu'**un échangeur de chaleur du côté du moteur (2) peut être ponté par une conduite de dérivation, moyennant quoi la déviation du moyen frigorigène, tout particulièrement de l'eau de refroidissement a lieu par une soupape à deux entrées (4) agencée entre la conduite de dérivation et l'échangeur de chaleur (2), tout particulièrement l'entrée ou la sortie de l'échangeur de chaleur.
